# EUROPEAN PATENT APPLICATION

(11) **EP 2 525 594 A1**
(43) Date of publication of application: **21.11.2012**
(21) Application number: 11800138.7
(22) Date of filing: 20.06.2011
(51) Int. Cl.: H04W 4/12, H04W 88/18

(54) **METHOD AND SERVICE MANAGEMENT PLATFORM EQUIPMENT FOR PERFORMING THE VALUE-ADDED SERVICE INSTRUCTION PROCESSING**

(30) Priority: 29.06.2010 CN 201010214989
(71) Applicant: ZTE Corporation, Shenzhen, Guangdong 518057 (CN)
(72) Inventor: LUO, Jintian, Shenzhen Guangdong 518057 (CN)
(74) Representative: Bokinge, Ole
(86) International application number: PCT/CN2011/075954
(87) International publication number: WO 2012/000393

(57) **Abstract**

The present invention discloses a method for performing value-added service instruction processing and a service management platform device. The method includes the following steps: after receiving a service request instruction sent by a user, when judging that the service request instruction is not a standard service request instruction supported by a service management platform, the service management platform calculating a matching degree of each standard service request instruction supported by the service management platform and the service request instruction, and informing the user of the standard service request instructions of which the matching degrees exceed a preset threshold and the service product information corresponding to these standard service request instructions. By adopting an intelligent judgment mode, the present invention can analyze and process an unidentified instruction input by a user, judge the real intention of the user, show a friendly and effective prompt to the user, and guide the user to correctly use the value-added service products, thereby improving the user experience.

## Description

### Technical Field

The present invention relates to the field of mobile value-added services, and in particular, to a method for performing value-added service instruction processing and a service management platform device.

### Background of the Related Art

With the constant development of the mobile communication technology and progressive improvement of the mobile phone popularizing rate, various value-added services of message type (such as short message or multi-media message service) associated with mobile phone have also been developed rapidly. Meanwhile, people have a higher requirement on the ease of use of the value-added service products. In practical use, before using a certain value-added service product, a user will usually send a message to order or subscribe the service product, and the content of the message sent by the user represents the order or subscription instruction of the corresponding product, and the a service management platform matches to the corresponding product according to the instruction and performs authentication processing. If the instruction is not correctly transmitted due to reasons such as the user's negligence, the service management platform will perform processing according to authentication error just because it cannot correctly match to the product, and only simply return a prompting message for prompting of order or subscription failure, for example "your order request fails", "your subscription request fails" and the like. However, such a prompt cannot correctly direct the user to use the value-added product, and is not friendly enough, thus reducing the user's experience.

### Summary of the Invention

The technical problem to be solved in the present invention is to improve the capability of the system for providing services and improving the user's experience by providing a method for performing value-added service instruction processing and a service management platform device in a case where the message type service order or subscription instruction has an error in a value-added service system.

In order to solve the above technical problem, the present invention provides a method for performing value-added service instruction processing, comprising the following steps of: after a service management platform receives a service request instruction sent by a user, when judging that the service request instruction is not a standard service request instruction supported by the service management platform, the service management platform calculating a matching degree of each standard service request instruction supported by the service management platform with the service request instruction, and informing the user of the standard service request instructions of which the matching degrees exceed a preset threshold and service product information corresponding to these standard service request instructions.

The method further comprises: when the matching degrees of all standard service request instruction supported by the service management platform with the service request instruction are smaller than the preset threshold, the service management platform informing the user of a service query method.

The method further comprises: after calculating the matching degree of each standard service request instruction supported by the service management platform with the service request instruction, the service management platform informing the user of the standard service request instruction with a highest matching degree and the service product information corresponding to the standard service request instruction.

The method further comprises: the service management platform maintaining a product prompting template used for providing product information and prompting the user to confirm the service request instruction, and adding the standard service request instructions of which the matching degrees exceed the preset threshold and the service product information corresponding to these standard service request instructions to the product prompting template and transmit it to the user.

The method further comprises: the service management platform maintaining a product prompting template used for providing product information and prompting the user to confirm the service request instruction, and adding the standard service request instruction with the highest matching degrees and the service product information corresponding to the standard service request instruction to the product prompting template and transmit it to the user.

The present invention also provides a service management platform device for performing value-added service instruction processing, comprising an instruction analyzing module and a prompting message issuing module;
the instruction analyzing module is configured to, after receiving a service request instruction sent by a user, when confirming that the service request instruction is not a standard service request instruction supported by the service management platform device, calculate a matching degree of each standard service request instruction supported by the service management platform device with the service request instruction, and when detecting a standard service request instruction of which the matching degree exceeds a preset threshold, send the standard service request instruction of which the matching degree exceeds the preset threshold to the prompting message issuing module;
the prompting message issuing module is configured to, after receiving the standard service request instruction from the instruction analyzing module, inform the user of the received standard service request instruction and service product information corresponding to the standard service request instruction.

Wherein, the instruction analyzing module is further configured to, after calculating the matching degree of each standard service request instruction supported by the service management platform device with the service request instruction, send a standard service request instruction with a highest matching degree to the prompting message issuing module.

The service management platform device further comprises a prompting template managing module, wherein:
the prompting message issuing module is further configured to, after receiving the standard service request instruction from the instruction analyzing module, send a product prompting template request message to the prompting template managing module, and after receiving a product prompting template returned by the prompting template managing module, add the received standard service request instruction and service product information corresponding to the standard service request instruction to the product prompting template and transmit it to the user;
the prompting template managing module is configured to, maintain the product prompting template used for providing product information and prompting the user to confirm the service request instruction, and send the product prompting template to the prompting message after receiving the product prompting template request message.

Wherein, the instruction analyzing module is further configured to, when judging that the matching degree of each standard service request instruction supported by the service management platform device with the service request instruction are smaller than the preset threshold, send a matching failure message to the prompting message issuing module;
the prompting message issuing module is further configured to, after receiving the matching failure message, inform the user of a service query method.

The service management platform device further comprises a prompting template managing module, wherein:
the prompting message issuing module is further configured to, after receiving the matching failure message, send a service query template request message to the prompting template managing module, and after receiving a service query template from the prompting template managing module, send content of the service query template to the user;
the prompting template managing module is configured to, maintain the service query template used for providing the service query method, and after receiving the service query template request message, send the service query template to the prompting message.

By adopting an intelligent judgment mode, the invention can analyze and process an unidentified instruction input by a user, judge the real intention of the user, show a friendly and effective prompt to the user, and guide the user to correctly use the value-added service products, thereby improving the user experience and enhancing the user's enthusiasm to use the value-added service, making the value-added service product be used by the user better and more frequently, thus bringing better popularity and benefits to the SP and the operator correspondingly.

### Brief Description of Drawings

FIG. 1 illustrates the composition structure of the service management platform device for performing value-added service instruction processing in an example;
FIG. 2 is a flowchart of the method for performing value-added service instruction processing in an example;
FIG. 3 is a flowchart of the method for performing value-added service instruction processing in a specific example.

### Preferred Embodiments of the Invention

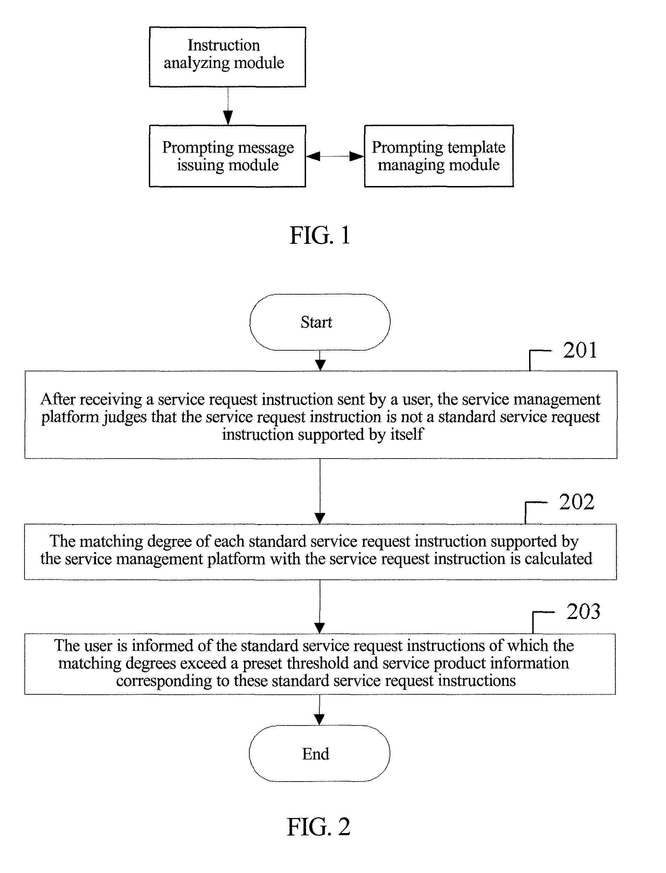

As shown in FIG. 1, the service management platform device for performing value-added service instruction processing comprises an instruction analyzing module, a prompting message issuing module and a prompting template managing module.

The instruction analyzing module is configured to, after receiving a service request instruction sent by a user, determine whether the service request instruction is a standard service request instruction supported by the service management platform, calculate a matching degree of each standard service request instruction supported by the service management platform and the service request instruction if not, and when detecting any standard service request instruction of which the matching degree exceeds a preset threshold, send the standard service request instruction of which the matching degree exceeds the preset threshold to the prompting message issuing module.

The prompting message issuing module is configured to, after receiving the standard service request instruction from the instruction analyzing module, inform the user of the standard service request instruction and service product information corresponding to the standard service request instruction.

The instruction analyzing module is further configured to, after calculating the matching degree of each standard service request instruction supported by the service management platform and the service request instruction, send a standard service request instruction with a highest matching degree to the prompting message issuing module.

The instruction analyzing module is further configured to, when judging that the matching degrees of all standard service request instruction supported by the service management platform and the service request instruction are smaller than the preset threshold, send a matching failure message to the prompting message issuing module. The prompting message issuing module is further configured to, after receiving the matching failure message, inform the user of a service query method.

A prompting template managing module is also incorporated in this service management platform device to store different templates, and when the prompting message issuing module provides prompting message for the user, a fixed template format is obtained from the prompting template managing module.

The prompting template managing module maintains a product prompting template used for providing product information and prompting the user to confirm the service request instruction, and uses the product prompting template in the following way:
the prompting message issuing module is further configured to, after receiving the standard service request instruction from the instruction analyzing module, send a product prompting template request message to the prompting template managing module, and after receiving a product prompting template returned by the prompting template managing module, add the standard service request instruction and service product information corresponding to the standard service request instruction to the product prompting template and transmit it to the user. The prompting template managing module is configured to, maintain the product prompting template used for providing product information and prompting the user to confirm the service request instruction, and send the product prompting template to the prompting message after receiving the product prompting template request message.

The prompting template managing module maintains a service query template used for providing the service query method, and uses the product prompting template in the following way:
the prompting message issuing module is further configured to, after receiving the matching failure message, send a service query template request message to the prompting template managing module, and after receiving a service query template from the prompting template managing module, send content of the service query template to the user. The prompting template managing module is configured to, maintain the service query template used for providing the service query method, and after receiving the service query template request message, send the service query template to the prompting message.

The service operation type corresponding to the service request instruction in the above application comprises order or subscription.

As shown in FIG. 2, the method for performing value-added service instruction processing comprises the following steps.

In step 201, after receiving a service request instruction sent by a user, the service management platform determines that the service request instruction is not a standard service request instruction supported by itself.

In step 202, the matching degree of each standard service request instruction supported by the service management platform with the service request instruction is calculated.

In step 203, the user is informed of the standard service request instructions of which the matching degrees exceed a preset threshold and service product information corresponding to these standard service request instructions.

Wherein, when the matching degrees of all standard service request instruction supported by the service management platform and the service request instruction are smaller than the preset threshold, the service management platform informs the user of a method for service query. This method for service query generally comprises information such as service consultation telephone number and service consultation website.

The service management platform maintaining a product prompt template used for providing product information and prompting the user to confirm the service request instruction, and adds the standard service request instructions of which the matching degrees exceed the preset threshold and the service product information corresponding to these standard service request instructions to the product prompt template and transmit the product prompt template to the user, or adds the standard service request instruction with the highest matching degrees and the service product information corresponding to the standard service request instruction to the product prompt template and transmit the product prompt template to the user. The service management platform also maintains a service query template used for providing the service query method, and when the matching degrees of all standard service request instruction supported by the service management platform with the service request instruction are smaller than the preset threshold, informs the user of the content of the service query template.

### Specific examples

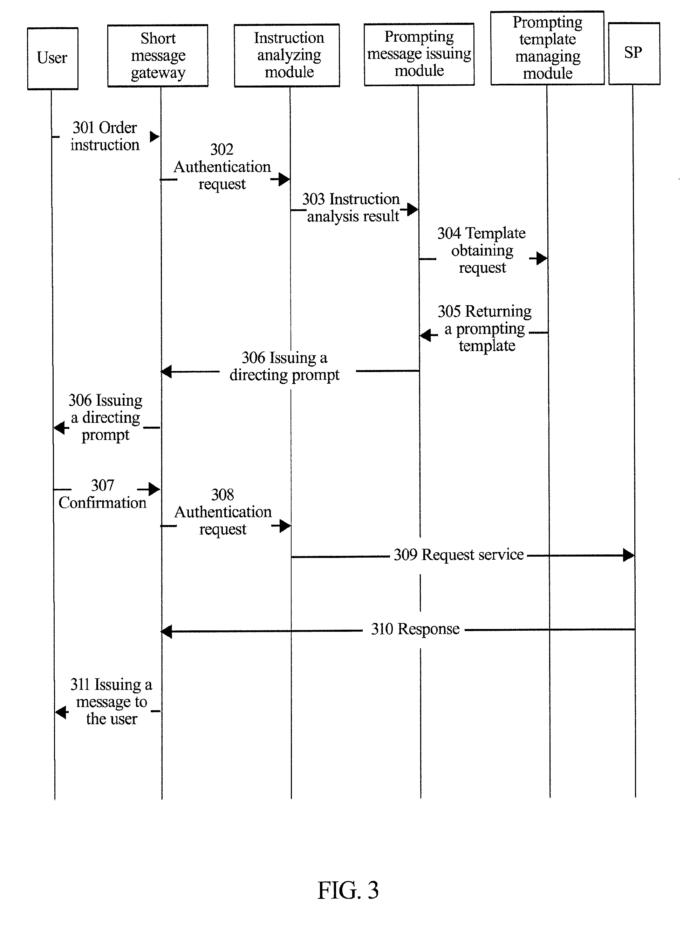

As shown in FIG. 3, the method for performing value-added service instruction processing will be described by taking a user subscribing to a service, which comprises the following steps.

In step 301, the user sends a subscription instruction, and this order instruction reaches a short message gateway via a short message center;

In step 302, after receiving the subscription instruction, the short message gateway initiates an authentication request message to the service management platform, where the authentication request message includes this subscription instruction.

In step 303, when an instruction analyzing module judges that this subscription instruction is not a standard service request instruction supported by the service management platform, it calculates a matching degree of each standard service request instruction supported by itself with the service request instruction, and sends the standard service request instructions of which the matching degrees exceed a preset threshold to a prompting message issuing module.

For example, a user wants to subscribe to a weather report, the corresponding standard service request instruction supported by the service management platform is DYTIANQI, but due to wrong input of the user, the subscription instruction transmitted is DYTIANQJ, and after the instruction analyzing module judges that this subscription instruction is not a standard service request instruction supported by the service management platform, it calculates a matching degree of each standard service request instruction supported by the service management platform with the service request instruction, and finally determines that the matching degree of the standard service request instruction "DYTIANQI" with this wrong instruction "DYTIANQJ" exceeds the preset threshold. For the algorithm for calculating the matching degree and the method for configuring the preset threshold, reference may by made to the algorithm for calculating the character string matching degree in the existing technology, and description will not be made here.

When the service management platform judges that the order instruction is correct, i.e., it is the standard service request instruction supported by the service management platform, a normal authentication flow is executed, which will not be repeated here.

In step 304, after receiving the standard service request instruction, the prompting message issuing module sends a product prompting template request message to the prompting template managing module;

In step 305, the prompting template managing module returns a product prompting template;

For example, the content of the product prompting template is: Honorific user, do you want to order the ** product? The correct order instruction of this product is: ***, directly reply Y if you determine to order this product.

In step 306, the prompting message issuing module adds the standard service request instruction and the corresponding service product information to the product prompting template and transmits the product prompting template to the user via the short message gateway.

For example, the prompting content of adding the standard service request instruction and the corresponding service product information is as follows: Honorific user, do you want to order the weather report product? The correct order instruction of this product is: DYTIANQI, directly reply Y if you determine to order this product.

In step 307, the user replies a confirmation message.

In step 308, the short message gateway receives the confirmation message of the user, and initiates an authentication request message to the service management platform, the authentication request message including the content of the reply of the user.

In step 309, the service management platform requests the Service Provider (SP) for the related service after successfully authenticating.

In step 310, the SP issues the corresponding message content to the short message gateway according to the product ordered by the user.

In step 311, the short message gateway sends the message content issued by the SP to the user through further authentication to the service management platform.

In the present invention, when the user sends a wrong service request instruction, a related prompt can be provided, which efficiently directs the user to correctly order or subscribe the product, thereby improving the quality of service.

The above examples are only preferred examples of the present invention, and are not used to limit the protection scope of the present invention. According to the inventive content of the present invention, there may be various other examples, and a person having ordinary skill in the art can make various corresponding modifications and transformations to the present invention without departing from the spirit and essence of the present invention. Any modification, equivalent substitution and improvement made within the spirit and principle of the present invention should be within the protection scope of the present invention.

A person having ordinary skill in the art can appreciate that all of part of the steps of the above method may be implemented by instructing related hardware with a program, which may be stored in a computer-readable medium, such as a read-only memory, a magnetic disk or an optical disk. Optionally, all of part of the steps of the above examples may also be implemented by using one or more integrated circuits. Correspondingly, each module/unit in the above examples may be implemented in the form of hardware, or in the form of software functional modules. The present invention is not limited to any particular form of combination of hardware and software.

### Industrial Applicability

By adopting an intelligent judgment mode, the invention can analyze and process an unidentified instruction input by a user, judge the real intention of the user, show a friendly and effective prompt to the user, and guide the user to correctly use the value-added service products, thereby improving the user experience and enhancing the user's enthusiasm to use the value-added service, making the value-added service product be used by the user better and more frequently, thus bringing better popularity and benefits to the SP and the operator correspondingly, and hence the present invention has a high industrial applicability.

## Claims

1. A method for performing value-added service instruction processing, comprising the following steps of:
after a service management platform receives a service request instruction sent by a user, when judging that the service request instruction is not a standard service request instruction supported by the service management platform, the service management platform calculating a matching degree of each standard service request instruction supported by the service management platform with the service request instruction, and informing the user of the standard service request instructions of which the matching degrees exceed a preset threshold and service product information corresponding to these standard service request instructions.

2. The method according to claim 1, further comprising: when the matching degrees of all standard service request instruction supported by the service management platform with the service request instruction are smaller than the preset threshold, the service management platform informing the user of a service query method.

3. The method according to claim 1, further comprising: after calculating the matching degree of each standard service request instruction supported by the service management platform with the service request instruction, the service management platform informing the user of the standard service request instruction with a highest matching degree and the service product information corresponding to the standard service request instruction.

4. The method according to claim 1, further comprising: the service management platform maintaining a product prompting template used for providing product information and prompting the user to confirm the service request instruction, and adding the standard service request instructions of which the matching degrees exceed the preset threshold and the service product information corresponding to these standard service request instructions to the product prompting template and transmit the product prompting template added with the standard service request instructions and the service product information to the user.

5. The method according to claim 3, further comprising: the service management platform maintaining a product prompting template used for providing product information and prompting the user to confirm the service request instruction, and adding the standard service request instruction with the highest matching degrees and the service product information corresponding to the standard service request instruction to the product prompting template and transmit the product prompting template added with the standard service request instructions and the service product information to the user.

6. A service management platform device for performing value-added service instruction processing, comprising an instruction analyzing module and a prompting message issuing module;
the instruction analyzing module is configured to, after receiving a service request instruction sent by a user, when confirming that the service request instruction is not a standard service request instruction supported by the service management platform device, calculate a matching degree of each standard service request instruction supported by the service management platform device with the service request instruction, and when detecting a standard service request instruction of which the matching degree exceeds a preset threshold, send the standard service request instruction of which the matching degree exceeds the preset threshold to the prompting message issuing module;
the prompting message issuing module is configured to, after receiving the standard service request instruction from the instruction analyzing module, inform the user of the received standard service request instruction and service product information corresponding to the standard service request instruction.

7. The service management platform device according to claim 6, wherein,
the instruction analyzing module is further configured to, after calculating the matching degree of each standard service request instruction supported by the service management platform device with the service request instruction, send a standard service request instruction with a highest matching degree to the prompting message issuing module.

8. The service management platform device according to claim 6 or 7, wherein, the service management platform device further comprises a prompting template managing module, wherein:
the prompting message issuing module is further configured to, after receiving the standard service request instruction from the instruction analyzing module, send a product prompting template request message to the prompting template managing module, and after receiving a product prompting template returned by the prompting template managing module, add the received standard service request instruction and service product information corresponding to the standard service request instruction to the product prompting template and transmit the product prompting template added with the standard service request instructions and the service product information to the user;
the prompting template managing module is configured to, maintain the product prompting template used for providing product information and prompting the user to confirm the service request instruction, and send the product prompting template to the prompting message after receiving the product prompting template request message.

9. The service management platform device according to claim 6, wherein,
the instruction analyzing module is further configured to, when judging that the matching degree of each standard service request instruction supported by the service management platform device with the service request instruction are smaller than the preset threshold, send a matching failure message to the prompting message issuing module;
the prompting message issuing module is further configured to, after receiving the matching failure message, inform the user of a service query method.

10. The service management platform device according to claim 9, wherein, the service management platform device further comprises a prompting template managing module, wherein:
the prompting message issuing module is further configured to, after receiving the matching failure message, send a service query template request message to the prompting template managing module, and after receiving a service query template from the prompting template managing module, send content of the service query template to the user;
the prompting template managing module is configured to, maintain the service query template used for providing the service query method, and after receiving the service query template request message, send the service query template to the prompting message.
